(19) Europäisches Patentamt / European Patent Office / Office européen des brevets

(11) **EP 2 687 950 A1**

(12) **EUROPEAN PATENT APPLICATION**

(43) Date of publication:
**22.01.2014 Bulletin 2014/04**

(51) Int Cl.:
***G06F 3/033*** (2013.01)

(21) Application number: **12177387.3**

(22) Date of filing: **20.07.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **BlackBerry Limited**
**Waterloo, ON N2K 0A7 (CA)**

(72) Inventors:
• **Parekh, Premal**
 **Waterloo, Ontario N2L 3W8 (CA)**
• **Singh, Amit Pal**
 **Waterloo, Ontario N2L 3W8 (CA)**

(74) Representative: **Roberts, Gwilym Vaughan**
**Kilburn & Strode LLP**
**Electronics**
**20 Red Lion Street**
**London WC1R 4PJ (GB)**

(54) **Orientation sensing stylus**

(57)    The present disclosure provides for method and apparatus for controlling an application executed on an electronic device (104) dependent upon the orientation of a stylus (100). The stylus (100) includes a rotation rate sensor (202), such as a gyroscope. A signal (208), dependent on the rotation rate (204), is transmitted from the stylus and received as signal (208') by the electronic device (104). The stylus orientation (220') may be determined from the rotation rate (204) using an integration circuit (402) to determine a rotation matrix (412) that is applied to an initial orientation vector (426). The electronic device (104) may use the stylus orientation (220') to determine the handedness of a user, to control properties of a drawing application, or for other purposes.

*FIG. 1*

EP 2 687 950 A1

**Description**

BACKGROUND

Stylus pointing devices enable information, such as position information, to be input to a host electronic device. In addition, the longitudinal or axial component of the force, or pressure, applied to the tip of a stylus may be used to control aspects of a drawing application executed on a computer or other processing device. This facilitates improved simulation of some drawing implements, although other drawing implements respond to additional characteristics, such as the angle of the drawing implement with respect to the drawing surface. One approach to measuring the angle is the use of a tilt or gravity sensor. This provides information about the angle of the stylus relative to the vertical direction, but does not indicate the angle of the stylus relative to the drawing surface (except when the surface is horizontal). An accelerometer, however, does not indicate the rotation of a stylus in the plane of the drawing surface. It would thus be useful to provide a way to determine the orientation of a stylus relative to a drawing surface of the host device.

BRIEF DESCRIPTION OF THE DRAWINGS

Exemplary embodiments of the present disclosure will be described below with reference to the included drawings such that like reference numerals refer to like elements and in which:
**FIG. 1** is a diagrammatic view of a drawing system, in accordance with exemplary embodiments of the present disclosure;
**FIG. 2** is a block diagram of computer drawing system, in accordance with exemplary embodiments of the present disclosure.
**FIG. 3** is a flow chart of a method for controlling an application using stylus orientation information, in accordance with exemplary embodiments of the present disclosure;
**FIG. 4** is a block diagram of a processing circuit for processing a  stylus rotation rate to produce a stylus orientation vector, in accordance with an exemplary embodiment of the disclosure;
**FIG. 5** is a block diagram of computer drawing system, in accordance with exemplary embodiments of the present disclosure; and
**FIG. 6** is a block diagram of computer drawing system, in accordance with further exemplary embodiments of the present disclosure.

DETAILED DESCRIPTION

For simplicity and clarity of illustration, reference numerals may be repeated among the figures to indicate corresponding or analogous elements. Numerous details are set forth to provide an understanding of the example embodiments described herein. The example embodiments may be practiced without these details. In other instances, well-known methods, procedures, and components have not been described in detail to avoid obscuring the example embodiments described. The description is not to be considered as limited to the scope of the exemplary embodiments described herein.
One aspect of the present disclosure relates to a method for controlling an application executed on an electronic device, in which the electronic device comprising receives a signal from a stylus, the signal being dependent on a rotation rate of the stylus. A stylus orientation is determined from the stylus signal, and is provided as an input to the application. In one embodiment, the received signal comprises a stylus rotation rate, in which case the stylus orientation is determined by setting an initial stylus orientation, integrating an exponential of the stylus rotation rate dependent upon the initial stylus orientation to produce a rotation matrix, and applying the rotation matrix to the initial stylus orientation.
In a further embodiment, the stylus orientation is embedded in the received signal, in which case the stylus orientation can be recovered from the received signal.
When the application is an electronic drawing application, the properties of lines rendered on a display of the electronic device can be adjusted dependent upon the stylus orientation.
In a further embodiment, the handedness of a user of the stylus is determined form the stylus orientation, and may be used to control the application.
A further aspect of the present disclosure relates to a stylus orientation sensor that includes an integration circuit and a rotation circuit. The integration circuit is operable to integrate an exponential of a sensed stylus rotation rate, dependent upon an initial stylus orientation, to produce a rotation matrix. The rotation circuit is operable to apply the rotation matrix to an initial stylus orientation to produce a stylus orientation. The stylus orientation sensor may also include a stylus equipped with a gyroscope. The gyroscope enables sensing of the stylus rotation rate.
The stylus orientation sensor may also include an electronic device equipped with a receiver, for receiving a signal dependent upon the stylus rotation rate from a stylus having a rotation rate sensor, a display screen, and a processor operable to render an image on the display screen dependent upon the stylus orientation.

A still further aspect of the present disclosure relates to a stylus having a gyroscope operable to sense a stylus rotation rate, a processor operable to produce a signal dependent on a rotation rate of the stylus, and a transmitter operable to transmit the signal dependent on a rotation rate of the stylus. Where the signal is dependent on a rotation rate of the stylus, the processor may include an integration circuit, operable to produce a rotation matrix in response to the sensed stylus rotation rate, and a rotation circuit, operable to apply the rotation matrix to an initial stylus orientation to produce a stylus orientation.

The stylus may include a user control, such as a button, motion sensor, force sensor or the like, that is operable to indicate when an orientation of the stylus is substantially the same as the initial stylus orientation.

A still further aspect of the present disclosure relates to an electronic device that include a receiver operable to receive a signal from a stylus, the signal dependent on a rotation rate of the stylus, and a processor operable to execute an application dependent upon the signal from the stylus. The processor may also be used to determine a stylus orientation in response to the signal from the stylus and to render an image on a display screen dependent upon the stylus orientation.

Operation of the stylus and/or the electronic device may controlled by processor executable instructions stored on a non-transitory computer-readable medium

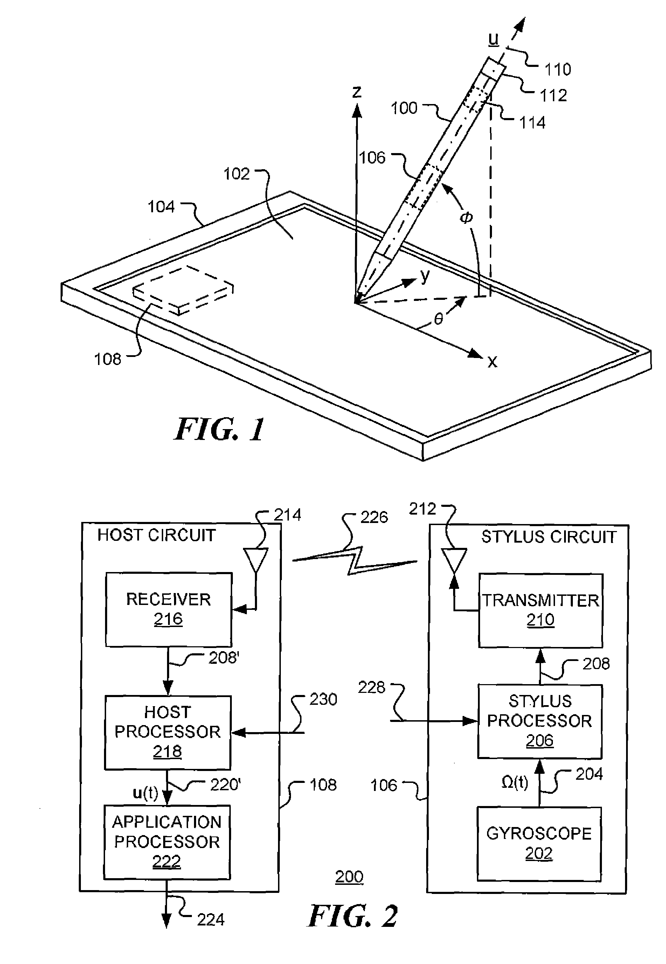

**FIG. 1** is a diagrammatic view of a drawing system comprising a stylus 100 that can be moved across a drawing surface 102 of a host electronic device 104. The stylus 100 is used to provide input to the host electronic device 104. The host electronic device 104 may be, for example, a laptop computer, tablet computer (tablet), mobile telephone, personal digital assistant (PDA), display screen, drawing pad, or other portable or non-portable electronic device. The stylus 100 may provide input to control a drawing application executed on a processor of the host electronic device. The input includes a position input that may be processed to render a line on the display 102. In accordance with one aspect of the present disclosure, the stylus 100 also provides input relating to the orientation of the stylus 100. An orientation input, or other input from which the orientation can be determined, may be communicated from the stylus 100 to the host electronic device 104 over a wireless communication link. A transmitter, such as an RF transmitter, together with orientation sensors and other elements, is included in electronics module 106 of the stylus, while a corresponding receiver is included in electronics module 108 of the host electronic device 104

In **FIG. 1,** the orientation of the stylus 100 is indicated by the vector 110. In the description below, the orientation vector 110 is denoted by a unit vector $\mathbf{u} = \{u_x, u_y, u_z\}^T$ with components in the $x$ and y directions (in the plane of the drawing surface 102) and in the $z$ direction (perpendicular to the drawing surface 102). The orientation vector 110 can also be written in terms of azimuth angle $\theta$ and elevation angle $\phi$ as

$$\mathbf{u} = \mathbf{u}(\theta,\phi) = \{\cos\theta\cos\phi, \sin\theta\cos\phi, \sin\phi\}^T.$$

The stylus 100 may include a user control to indicate when the stylus is in an initial orientation. The user control may be a button 112 on the top or side of the stylus, or a sensor 114 within the stylus. The sensor 114 may be a motion sensor such as an accelerometer, or a force sensor, such a tip pressure sensor, for example.

The orientation input provided by the stylus 100 may be used to control various aspects of an application executed on the host electronic device 104. For example, the orientation input may be used to as input to a computer simulation of a drawing implement, such as a pen or brush. The orientation may be used to control aspects of a line produced by the drawing implement, such as the width of the line, the color saturation, the line style or the opacity, for example.

In a further embodiment, the orientation of the stylus 100 is used to control other aspects of the application, such as the orientation of an object rendered on the display 102.

In a still further embodiment, the orientation of the stylus 100 is used to determine the handedness of a user. The handedness, in turn, may be used to provide improved prediction of the stylus position, for example.

**FIG. 2** is a block diagram of computer drawing system 200, in accordance with exemplary embodiments of the present disclosure. The drawing system 200 includes electronics module 106 of a stylus and electronics module 108 of a host electronic device. The stylus electronics module 106 includes triaxial gyroscope 202 that measures the rotation rates of the stylus about three independent axes to provide a rotation rate 204 (which may be represented as a rotation rate vector $\omega(t)$ or, equivalently, as a rotation rate matrix $\Omega(t)$). The rotation rate 204 is passed to stylus processor 206 that generates stylus signal 208 dependent upon the rotation rate 204. The stylus electronics module 106 also includes transmitter 210 that encodes and modulates the stylus signal 208 and transmits it from antenna 212. Electronics module 108 of the host electronic device includes receiver 216, with antenna 214, which receives the signal transmitted from the transmitter 210 of the stylus via communication path 226. The received signal is demodulated in receiver 216 to recover the stylus signal 208'. The recovered stylus signal 208' is input to host processor 218 where it is processed to determine orientation vector 220' (denoted as u(t)). The orientation vector 220' may be used to control various aspects of an application executed on application processor 222 of host electronic device. The application processor 222 may provide an output 224 to control a display screen of the host electronic device.

The rotation rate (denoted as $\omega(t)$ or $\Omega(t)$) is processed to determine the orientation vector $\mathbf{u}(t)$. This processing may be performed in processor 206 of stylus circuit 106 or in processor 218 of host circuit 108, or the processing may be split between both processors. If the processing is performed in processor 206 of stylus circuit 106, an input 228 from a user control of the stylus (such as a button, a motion sensor or a force sensor) may be provided to indicate when the stylus is in an initial orientation. If the processing is performed in processor 218 of host circuit 108, an input 230 from a user control of the host electronic device, or from the stylus, may be provided to indicate when the stylus is in an initial orientation.

In accordance with one aspect of the present disclosure, an orientation of the stylus is determined from a rotation rate vector sensed by a gyroscope of the stylus. The orientation is represented, as depicted by element 110 in **FIG. 1,** as a vector in the direction of the longitudinal axis of a stylus. The vector at time t is denoted by $\mathbf{u}(t)$. The direction at time $t$ is related to the direction at an initial time $t=0$ by the expression

$$\mathbf{u}(t) = R(t)\mathbf{u}(0), \qquad\qquad (1)$$

where $R(t)$ is a rotation matrix. In an inertial reference frame, the rotation rate is $\dot{R}(t)$. Hence, in the frame of the stylus, the rotation rate matrix is

$$\Omega(t) \equiv \begin{bmatrix} 0 & -\omega_z & \omega_y \\ \omega_z & 0 & -\omega_x \\ -\omega_y & \omega_x & 0 \end{bmatrix} \square \; R^T(t)\dot{R}(t), \qquad\qquad (2)$$

where $\omega = \{\omega_x, \omega_y, \omega_z\}^T$ is the rotation rate vector. In one embodiment, the rotation rate vector is measured using a 3-axis gyroscope. As indicated by definition (2), the rotation matrix $\Omega(t)$ and the rotation rate vector $\omega = \{\omega_x, \omega_y, \omega_z\}^T$ are alternative presentations of the same information.

Equation (2) may be rearranged as $\dot{R}(t) = R(t)\Omega(t)$, so the rotation matrix $R(t)$ may be determined from the rotation rate matrix $\Omega(t)$ as

$$R(t) = R(0)\exp\left\{ \int_{t'=0}^{t} \Omega(t')dt' \right\}, \qquad\qquad (3)$$

where $R(0)$ is the 3×3 identity matrix.

When the rotation rate signals are sampled with sampling interval $T$, the computation in equation (3) may be implemented by a digital processor using. For example, in one embodiment the rotation matrix is updated according to

$$R(t) = R(t-T)W(t), \;\; \text{for } t = T, 2T, 3T, \dots, \qquad\qquad (4)$$

where $\sigma = |\omega|T$ is the product of the magnitude of the rotation rate vector and the sampling interval $T$, and

$$W(t) = I + \frac{\sin\sigma}{\sigma}\Omega(t)T + \frac{1-\cos\sigma}{\sigma^2}\Omega^2(t)T^2 \qquad\qquad (5)$$

is an approximation to the integral of the exponential of the rotation rate over the sampling interval. Thus, in one embodiment, the stylus orientation vector $\mathbf{u}(t)$ is updated, dependent upon a rotation rate matrix $\Omega(t)$ measured at time $t$, according to

$$
\begin{aligned}
&R(0) = I, \\
&W(t) = 1 + \frac{\sin\sigma}{\sigma}\Omega(t)T + \frac{1-\cos\sigma}{\sigma^2}\Omega^2(t)T^2, \\
&R(t) = R(t-T)W(t), \quad \text{for } t = T, 2T, 3T, \ldots \\
&\mathbf{u}(t) = R(t)\mathbf{u}(0).
\end{aligned}
\tag{6}
$$

It is noted that equation (6) is dependent upon an initial stylus orientation vector $\mathbf{u}(0)$.

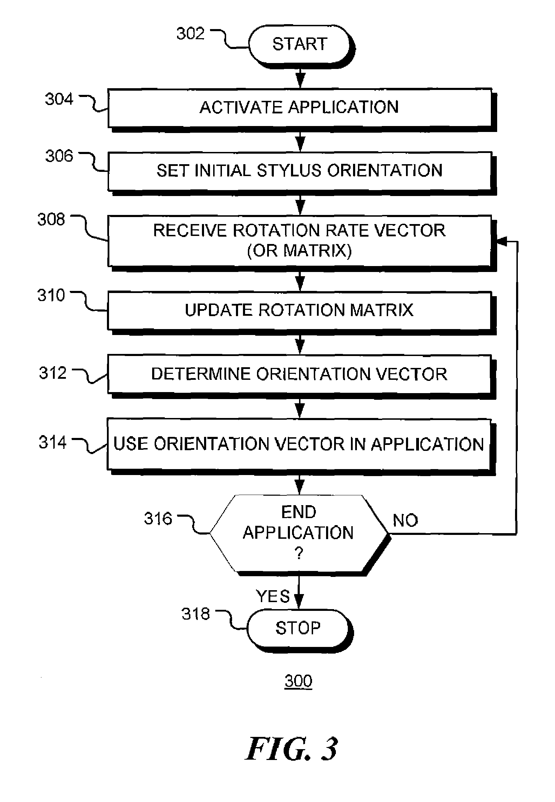

**FIG. 3** is a flow chart 300 of a method for controlling an application using stylus orientation information, in accordance with exemplary embodiments of the present disclosure. Following start block 302, an application is activated on a host electronic device at block 304. At block 306, an initial stylus orientation is set. This may be done by a user indicating that the stylus is in a selected orientation. For example, the user may hold the stylus perpendicular to the display or drawing surface and tap the surface a number of times to indicate that the initial orientation vector is $\mathbf{u}(t=0)= \{0,0,1\}^T$, i.e. in the z-direction. Alternatively, the user may press a button on the stylus. Alternatively, the stylus may be placed along a selected edge of the display or drawing surface. The initial orientation vector is $\mathbf{u}(t=0)=\{0,1,0\}^T$ if the edge is vertical or $\mathbf{u}(t=0)=\{1,0,0\}^T$ if the edge is horizontal. In a further embodiment, an image of a stylus is rendered on the display in a known orientation and the user places the stylus over the image. The time at which the initial orientation vector is set is taken at time $t=0$ in equation (6) above. At block 308, a rotation rate vector is received from the stylus and, at block 310, the corresponding rotation rate matrix is integrated to produce the rotation matrix $R(t)$. The rotation matrix describes how the orientation of the stylus has changed since the initial orientation was set. At block 312 the orientation vector is determined by applying the rotation matrix $R(t)$ to the initial orientation vector $\mathbf{u}(0)$. At block 314, the orientation vector is used to control an application. The orientation may be transmitted to a remote device and used to control that device. If the application is terminated, as depicted by the positive branch from decision block 316, the method stops at block 318. Otherwise, as depicted by the negative branch from decision block 316, flow returns to block 308.

Blocks 306-312 may be performed by a host electronic device. Alternatively, the method may be performed by a processor on the stylus itself, provided the initial stylus orientation is known to the stylus. The stylus orientation vector may be determined by a processor on the stylus itself. For example, a 'double tap', button press, or other gesture may be used to indicate that the stylus is in a known initial position. The orientation vector and/or the rotation rate vector may then be transmitted to the host electronic device.

In one embodiment, the stylus is used as a joystick. The joystick may used for controlling computer games, drawings applications, remote controlled toys, robotic devices, etc.

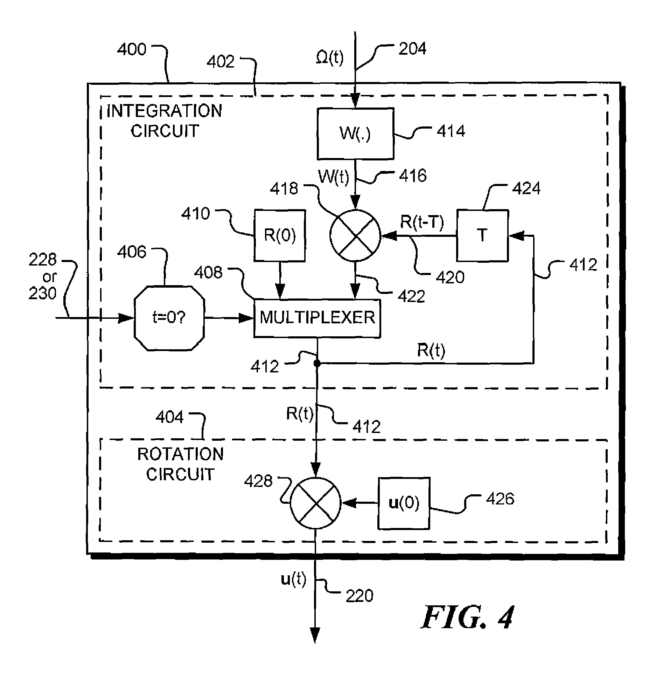

**FIG. 4** is a block diagram of an exemplary processing circuit 400 of a stylus orientation sensor. The processing circuit 400 processes a stylus rotation rate 204 to produce a stylus orientation vector 220, in accordance with an exemplary embodiment of the disclosure. The processing circuit 400 may be implemented in a stylus or in a host electronic device, or a combination thereof. The circuit 400 includes integration circuit 402 and rotation circuit 404. Integration circuit 402 receives the rotation rate matrix $\Omega(t)$ (204) as input. Integration circuit 402 is initialized at time $t=0$, when logic unit 406 controls multiplexer 408 to select an initial rotation matrix 410 as the rotation matrix 412. The time may be set by input 228 or 230 from a user control, such as a button on the stylus or a user interface of the host electronic device. Computation module 414 receives the rotation rate matrix $\Omega(t)$ (204) and from it computes the weighting matrix $W(t)$ as defined in equation (5) above. The weighting matrix 416 is multiplied in multiplication circuit 418 by a delayed rotation matrix $R(t-T)$ (420) to produce an updated rotation matrix 422. The delayed rotation matrix 420 is produced by delaying rotation matrix 412 in delay unit 424. For times $t>0$, multiplexer 408 selects the updated rotation matrix 422 as the rotation matrix 412. The rotation matrix $R(t)$ (412) is output from integration circuit 402 and, in rotation circuit 404, multiplies initial orientation vector 426 in multiplier 428 to determine the current orientation vector 220, as described in equation (1). Integration circuit 402 produces an approximation to the time integral of the exponential of the rotation rate matrix. Other integration circuits may be used to approximate this time integration.

The processing circuit 400 may be implemented on a programmed processor, a field programmable gate array, a custom logic circuit, an application specific circuit, or the like.

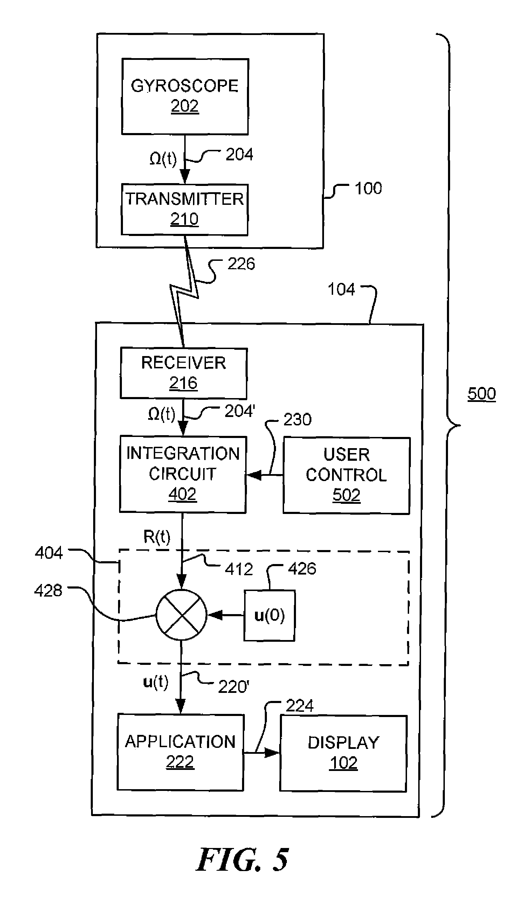

**FIG. 5** is a block diagram of computer drawing system 500, in accordance with an exemplary embodiment of the present disclosure. The drawing system 500 includes stylus 100 and host electronic device 104. The stylus 100 includes triaxial gyroscope 202 that measures the rotation rates of the stylus about three independent axes to provide a rotation rate 204 (rotation rate vector $\omega(t)$ or, equivalently, rotation rate matrix $\Omega(t)$). Rotation rate 204 is passed to transmitter 210 that encodes and modulates the rotation rate and transmits it over communication path 226 to the receiver 216 of the host electronic device 104. The received signal is demodulated in receiver 216 to recover the rotation rate 204' that, in turn, is processed in integration circuit 402 to determine a rotation matrix 412. The integration circuit is responsive to a signal 230 from a user control 502, which indicates when the stylus is an initial orientation. Multiplier 428 applies the rotation matrix 412 to an initial orientation vector 426 to produce current orientation vector $\mathbf{u}(t)$ (220'). The orientation vector 220' may be used to control various aspects of an application executed on application processor 222 of host electronic device. The application processor 222 may provide an output 224 to control display screen 102 of the host electronic device 104.

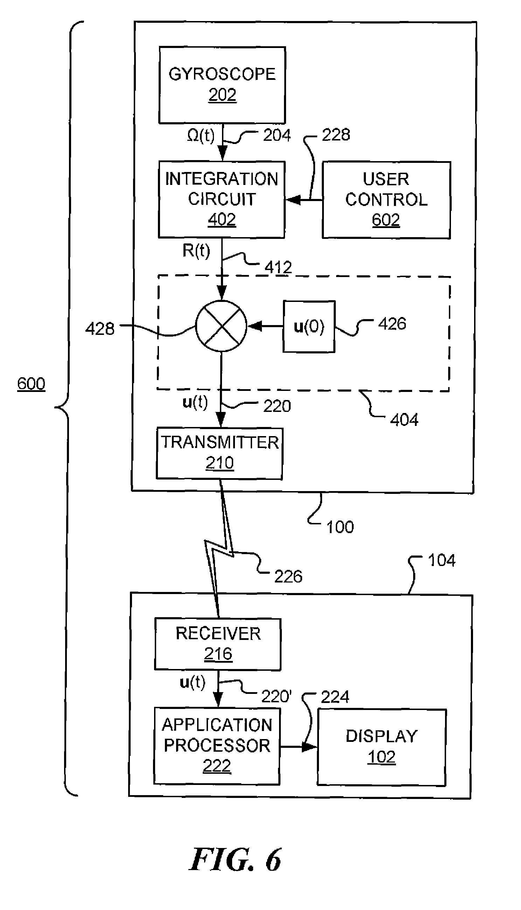

**FIG. 6** is a block diagram of computer drawing system 600, in accordance with further exemplary embodiments of the present disclosure. The drawing system 600 includes stylus 100 and host electronic device 104. The stylus 100 includes triaxial gyroscope 202 that measures the rotation rates of the stylus about three independent axes to provide a rotation rate 204 (rotation rate vector $\omega(t)$ or, equivalently, rotation rate matrix $\Omega(t)$). Rotation rate 204 is processed in integration circuit 402 to determine a rotation matrix 412. The integration circuit 402 is responsive to signal 228 from user control 602, which indicates when the stylus is in an initial orientation. Multiplier 428 applies the rotation matrix 412 to an initial orientation vector 426 to produce current orientation vector $\mathbf{u}(t)$ (220). The orientation vector 220 is passed to transmitter 210 that encodes and modulates it and transmits it to the receiver 216 of the host electronic device 104 via communication path 226. The received signal is demodulated in receiver 216 to recover the orientation vector 220'. The recovered orientation vector 220' may be used to control various aspects of an application executed on application processor 222 of host electronic device. The application processor 222 may provide an output 224 to control display screen 102 of the host electronic device 104.

The implementations of the present disclosure described above are intended to be examples only. Those of skill in the art can effect alterations, modifications and variations to the particular exemplary embodiments herein without departing from the intended scope of the present disclosure. Moreover, selected features from one or more of the above-described exemplary embodiments can be combined to create alternative exemplary embodiments not explicitly described herein.

It will be appreciated that any module or component disclosed herein that executes instructions may include or otherwise have access to non-transient and tangible computer readable media such as storage media, computer storage media, or data storage devices (removable or non-removable) such as, for example, magnetic disks, optical disks, or tape data storage. Computer storage media may include volatile and non-volatile, removable and non-removable media implemented in any method or technology for storage of information, such as computer readable instructions, data structures, program modules, or other data. Examples of computer storage media include RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by an application, module, or both. Any such computer storage media may be part of the server, any component of or related to the network, backend, etc., or accessible or connectable thereto. Any application or module herein  described may be implemented using computer readable/executable instructions that may be stored or otherwise held by such computer readable media.

The implementations of the present disclosure described above are intended to be merely exemplary. It will be appreciated by those of skill in the art that alterations, modifications and variations to the illustrative embodiments disclosed herein may be made without departing from the scope of the present disclosure. Moreover, selected features from one or more of the above-described embodiments may be combined to create alternative embodiments not explicitly shown and described herein.

The present disclosure may be embodied in other specific forms without departing from its spirit or essential characteristics. The described exemplary embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

According to additional aspects there are provided:

1. A method for controlling an application executed on an electronic device, comprising:

receiving a signal from a stylus, the signal dependent on a rotation rate of the stylus;

determining a stylus orientation dependent upon the received signal; and

providing the stylus orientation as an input to the application.

2. The method of 1, where the received signal comprises a stylus rotation rate, and where determining the stylus orientation dependent upon the received signal comprises:

setting an initial stylus orientation;

integrating an exponential of the stylus rotation rate dependent upon the

initial stylus orientation to produce a rotation matrix; and applying the rotation matrix to the initial stylus orientation.

3. The method of 1, where the stylus orientation is embedded in the received signal, and where determining the stylus orientation dependent upon the received signal comprises:

recovering the stylus orientation from the received signal.

4. The method of 1, where the application comprises an electronic drawing application, the method further comprising:

rendering a line on a display of the electronic device dependent upon the stylus orientation.

5. The method of 1, further comprising:

determining a handedness of a user of the stylus dependent upon the stylus orientation; and

controlling the application dependent upon the determined handedness of the user.

6. A stylus orientation sensor, comprising:

an integration circuit operable to integrate an exponential of a sensed stylus rotation rate, dependent upon an initial stylus orientation, to produce a rotation matrix; and

a rotation circuit operable to apply the rotation matrix to an initial stylus orientation to produce a stylus orientation.

7. The stylus orientation sensor of 6, further comprising:

a stylus; and

a gyroscope located in the stylus and operable to sense the stylus rotation rate.

8. The stylus orientation sensor of 6, further comprising:

an electronic device; and

a receiver operable to receive a signal dependent upon the stylus rotation rate from a stylus having a rotation rate sensor.

9. The stylus orientation sensor of 8, further comprising:

a display screen; and

a processor operable to render an image on the display screen dependent upon the stylus orientation.

10. A stylus, comprising:

a gyroscope operable to sense a stylus rotation rate;

a processor operable to produce a signal dependent on a rotation rate of the stylus; and

a transmitter operable to transmit the signal dependent on a rotation rate of the stylus.

11. The stylus of 10, where the processor comprises:

an integration circuit operable to produce a rotation matrix in response to

the sensed stylus rotation rate; and

a rotation circuit operable to apply the rotation matrix to an initial stylus orientation to produce a stylus orientation,

where the signal dependent on a rotation rate of the stylus comprises the stylus orientation.

12. The stylus of 11, further comprising:

a user control operable to indicate when an orientation of the stylus is substantially the same as the initial stylus orientation.

13. The stylus of 12, where the user control comprises a button on the stylus.

14. The stylus of 12, where the user control comprises a motion sensor.

15. The stylus of 12, where the user control comprises a force sensor operable to sense force applied to a tip of the stylus.

16. An electronic device, comprising:

a receiver operable to receive a signal from a stylus, the signal dependent on a rotation rate of the stylus; and

a processor operable to execute an application dependent upon the signal received from the stylus.

17. The electronic device of 16, where the processor is further operable to determine a stylus orientation in response to the signal from the stylus.

18. The electronic device of 17, further comprising:

a display screen,

where the processor is further operable to render an image on the display screen dependent upon the stylus orientation.

19. The electronic device of 17, further comprising:

a display screen,

where the processor is further operable to render an image on the display screen to indicate an initial stylus orientation.

20. The electronic device of 17, where the processor is further operable to determine a handedness of a user dependent upon the stylus orientation.

21. The electronic device of 16, where the signal from the stylus comprises a stylus rotation rate, further comprising:

an integration circuit operable to produce a rotation matrix from the stylus rotation rate; and

a rotation circuit operable to apply the rotation matrix to an initial stylus orientation to produce a stylus orientation,

where the processor is operable to execute the application dependent upon the stylus orientation.

22. A non-transitory computer-readable medium having processor-executable instructions that, when executed on a processor of an electronic device, cause the electronic device to:

receive a signal from a stylus, the signal dependent on a rotation rate of the stylus; and

execute an application dependent upon the signal from the stylus.

23. The non-transitory computer-readable medium of 22 having further processor-executable instructions that, when executed on a processor of an electronic device, cause the electronic device to:

determine a stylus orientation in response to the signal from the stylus.

24. The non-transitory computer-readable medium of 23 having further processor-executable instructions that, when executed on a processor of an electronic device, cause the electronic device to:

render an image on the display screen dependent upon the stylus orientation.

25. The non-transitory computer-readable medium of 22 having further processor-executable instructions that, when executed on a processor of an electronic device, cause the electronic device to:

determine a handedness of a user dependent upon the stylus orientation.


**Claims**

1. A method for controlling an application (222) executed on an electronic device (104), comprising:

   receiving a signal (208') from a stylus (100), the signal dependent on a rotation rate of the stylus (100);
   determining a stylus orientation (220') dependent upon the received signal (208'); and
   providing the stylus orientation (220') as an input to the application (222).

2. The method of claim 1, where the received signal (208') comprises a stylus rotation rate (204'), and where determining the stylus orientation dependent upon the received signal comprises:

   setting an initial stylus orientation (426);
   integrating an exponential of the stylus rotation rate dependent upon the initial stylus orientation to produce a rotation matrix (412); and
   applying the rotation matrix (402) to the initial stylus orientation (426).

3. The method of claim 1, where the stylus orientation (220) is embedded in the received signal (208'), and where determining the stylus orientation dependent upon the received signal comprises:

   recovering the stylus orientation (220') from the received signal.

4. The method of claim 1, where the application (222) comprises an electronic drawing application, the method further comprising:

   rendering a line on a display (102) of the electronic device (104) dependent upon the stylus orientation (220').

5. The method of claim 1, further comprising:

   determining a handedness of a user of the stylus dependent upon the stylus orientation (220'); and
   controlling the application (222) dependent upon the determined handedness of the user.

6. A stylus (100), comprising:

   a gyroscope (202) operable to sense a stylus rotation rate (204);
   a processor (206) operable to produce a signal (208) dependent on a rotation rate of the stylus; and
   a transmitter (210) operable to transmit the signal (208) dependent on a rotation rate (204) of the stylus (100).

**7.** The stylus of claim 6, where the processor (206) comprises:

an integration circuit (402) operable to produce a rotation matrix (412) in response to the sensed stylus rotation rate (204); and
a rotation circuit (404) operable to apply the rotation matrix (412) to an initial stylus orientation (426) to produce a stylus orientation (220),

where the signal (208) dependent on a rotation rate (204) of the stylus (100) comprises the stylus orientation (220).

**8.** The stylus of claim 7, further comprising:

a user control (602) operable to indicate when an orientation of the stylus is substantially the same as the initial stylus orientation.

**9.** The stylus of claim 8, where the user control (602) comprises a user control selected from the group of user controls consisting of:

a button (112) on the stylus (100);
a motion sensor (114); and
a force sensor (114).

**10.** An electronic device (104), comprising:

a receiver (206) operable to receive a signal (208') from a stylus (100), the signal (208') dependent on a rotation rate (204) of the stylus (100); and
an application processor (222) operable to execute an application dependent upon the signal received (208') from the stylus (100).

**11.** The electronic device of claim 10, further comprising:

a host processor (218) operable to determine a stylus orientation (220') in response to the signal (208') from the stylus (100).

**12.** The electronic device of claim 11, further comprising:

a display screen (102),

where the application processor (222) is further operable to render an image on the display screen (102) dependent upon the stylus orientation (220').

**13.** The electronic device of claim 11, further comprising:

a display screen (102),
where the application processor (222) is further operable to render an image on the display screen (102) to indicate an initial stylus orientation (426).

**14.** The electronic device of claim 11, where the application processor (222) is further operable to determine a handedness of a user dependent upon the stylus orientation (220').

**15.** The electronic device of claim 10, where the signal (208') from the stylus (100) comprises a stylus rotation rate (204'), further comprising:

an integration circuit (402) operable to produce a rotation matrix (412) from the stylus rotation rate (204'); and
a rotation circuit (404) operable to apply the rotation matrix (412) to an initial stylus orientation (426) to produce a stylus orientation (220'),

where the application processor (222) is operable to execute the application dependent upon the stylus orientation (220').

**Amended claims in accordance with Rule 137(2) EPC.**

**1.** A method for controlling an application (222) executed on an electronic device (104), comprising:

setting an initial stylus orientation (426) relative to the display;
receiving a signal (208') from the stylus (100), the signal dependent on a rotation rate of the stylus (100);
determining a stylus orientation (220') dependent upon the received signal (208') and the initial stylus orientation; and
providing the stylus orientation (220') as an input to the application (222).

**2.** The method of claim 1, where the received signal (208') comprises a stylus rotation rate (204'), and where determining the stylus orientation dependent upon the received signal comprises:

integrating an exponential of the stylus rotation rate dependent upon the initial stylus orientation to produce a rotation matrix (412); and
applying the rotation matrix (402) to the initial stylus orientation (426).

**3.** The method of claim 1, where the stylus orientation (220) is embedded in the received signal (208'), and where determining the stylus orientation dependent upon the received signal comprises:

recovering the stylus orientation (220') from the received signal.

**4.** The method of claim 1, where the application (222) comprises an electronic drawing application, the method further comprising:

rendering a line on the display (102) of the electronic device (104) dependent upon the stylus orientation (220').

**5.** The method of claim 1, further comprising:

determining a handedness of a user of the stylus dependent upon the stylus orientation (220'); and
controlling the application (222) dependent upon the determined handedness of the user.

**6.** A stylus (100), comprising:

a gyroscope (202) operable to sense a stylus rotation rate (204) and an initial stylus orientation;
a processor (206) operable to produce a signal (208) dependent on a rotation rate of the stylus; and
a transmitter (210) operable to transmit the signal (208) dependent on a rotation rate (204) of the stylus (100).

**7.** The stylus of claim 6, where the processor (206) comprises:

an integration circuit (402) operable to produce a rotation matrix (412) in response to the sensed stylus rotation rate (204); and
a rotation circuit (404) operable to apply the rotation matrix (412) to an initial stylus orientation (426) to produce a stylus orientation (220),

where the signal (208) dependent on a rotation rate (204) of the stylus (100) comprises the stylus orientation (220).

**8.** The stylus of claim 7, further comprising:

a user control (602) operable to indicate when an orientation of the stylus is substantially the same as the initial stylus orientation.

**9.** The stylus of claim 8, where the user control (602) comprises a user control selected from the group of user controls consisting of:

a button (112) on the stylus (100);
a motion sensor (114); and
a force sensor (114).

**10.** An electronic device (104), comprising:

a receiver (206) operable to receive a signal (208') from a stylus (100) as claimed in claim 6, the signal (208') dependent on a rotation rate (204) of the stylus (100); and
an application processor (222) operable to execute an application dependent upon the signal received (208') from the stylus (100).

**11.** The electronic device of claim 10, further comprising:

a host processor (218) operable to determine a stylus orientation (220') in response to the signal (208') from the stylus (100).

**12.** The electronic device of claim 11, further comprising:

a display screen (102),

where the application processor (222) is further operable to render an image on the display screen (102) dependent upon the stylus orientation (220').

**13.** The electronic device of claim 11, further comprising:

a display screen (102),

where the application processor (222) is further operable to render an image on the display screen (102) to indicate an initial stylus orientation (426).

**14.** The electronic device of claim 11, where the application processor (222) is further operable to determine a handedness of a user dependent upon the stylus orientation (220').

**15.** The electronic device of claim 10, where the signal (208') from the stylus (100) comprises a stylus rotation rate (204'), further comprising:

an integration circuit (402) operable to produce a rotation matrix (412) from the stylus rotation rate (204'); and
a rotation circuit (404) operable to apply the rotation matrix (412) to an initial stylus orientation (426) to produce a stylus orientation (220'),

where the application processor (222) is operable to execute the application dependent upon the stylus orientation (220').

**FIG. 1**

**FIG. 2**

302 — START

304 — ACTIVATE APPLICATION

306 — SET INITIAL STYLUS ORIENTATION

308 — RECEIVE ROTATION RATE VECTOR (OR MATRIX)

310 — UPDATE ROTATION MATRIX

312 — DETERMINE ORIENTATION VECTOR

314 — USE ORIENTATION VECTOR IN APPLICATION

316 — END APPLICATION ? — NO

YES

318 — STOP

300

*FIG. 3*

FIG. 4

**FIG. 5**

*FIG. 6*

Europäisches
Patentamt

European
Patent Office

Office européen
des brevets

# EUROPEAN SEARCH REPORT

Application Number

EP 12 17 7387

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/140964 A1 (WANG JIAN [CN] ET AL) 22 July 2004 (2004-07-22) * paragraph [0027] - paragraph [0098] * * paragraph [0102] - paragraph [0104] * | 1-15 | INV. G06F3/033 |
| X | US 2005/083314 A1 (SHALIT TOMER [SE] ET AL) 21 April 2005 (2005-04-21) * the whole document * | 1-15 | |
| A | JP 6 067799 A (SEIKO INSTR INC) 11 March 1994 (1994-03-11) * abstract * | 2,7,15 | |
| A | Yizhong Xin ET AL: "Acquiring and pointing: an empirical study of pen-tilt-based interaction", Proceedings of the SIGCHI Conference on Human Factors in Computing Systems - CHI 2011, 7 May 2011 (2011-05-07), pages 849-858, XP055045306, Vancouver, BC, Canada Retrieved from the Internet: URL:http://dl.acm.org/ft_gateway.cfm?id=19 79066 [retrieved on 2012-11-22] * page 849 - page 850 * * page 856 - page 857 * | 4 | TECHNICAL FIELDS SEARCHED (IPC) G06F |
| A | US 5 774 571 A (MARSHALL JAMES [GB]) 30 June 1998 (1998-06-30) * column 7, paragraph 66 - column 8, paragraph 4 * | 5,14 | |

The present search report has been drawn up for all claims

| Place of search | Date of completion of the search | Examiner |
|---|---|---|
| Munich | 22 November 2012 | Tonet, Oliver |

EPO FORM 1503 03.82 (P04C01)

**ANNEX TO THE EUROPEAN SEARCH REPORT
ON EUROPEAN PATENT APPLICATION NO.**                EP 12 17 7387

This annex lists the patent family members relating to the patent documents cited in the above-mentioned European search report.
The members are as contained in the European Patent Office EDP file on
The European Patent Office is in no way liable for these particulars which are merely given for the purpose of information.

22-11-2012

| Patent document cited in search report | | Publication date | Patent family member(s) | | Publication date |
|---|---|---|---|---|---|
| US 2004140964 | A1 | 22-07-2004 | NONE | | |
| US 2005083314 | A1 | 21-04-2005 | CN | 1543599 A | 03-11-2004 |
| | | | EP | 1417562 A1 | 12-05-2004 |
| | | | JP | 4058406 B2 | 12-03-2008 |
| | | | JP | 2004537118 A | 09-12-2004 |
| | | | SE | 523636 C2 | 04-05-2004 |
| | | | SE | 0102583 A | 23-01-2003 |
| | | | US | 2005083314 A1 | 21-04-2005 |
| | | | WO | 03010653 A1 | 06-02-2003 |
| JP 6067799 | A | 11-03-1994 | NONE | | |
| US 5774571 | A | 30-06-1998 | AT | 197198 T | 15-11-2000 |
| | | | DE | 69519208 D1 | 30-11-2000 |
| | | | EP | 0696019 A2 | 07-02-1996 |
| | | | GB | 2291996 A | 07-02-1996 |
| | | | US | 5774571 A | 30-06-1998 |

EPO FORM P0459

For more details about this annex : see Official Journal of the European Patent Office, No. 12/82